# EUROPEAN PATENT SPECIFICATION

(11) **EP 4 651 986 B1**
(45) Date of publication and mention of the grant of the patent: **29.07.2026**
(21) Application number: 24711312.9
(22) Date of filing: 01.02.2024
(51) Int. Cl.: B01J 2/02, B82Y 30/00, C01B 33/02, C09K 11/59

(54) **HINDERED PIPERIDINE DERIVATIVE FUNCTIONALIZED SILICON NANOPARTICLES**
FUNKTIONALISIERTE SILICIUMNANOPARTIKEL MIT GEHINDERTEN PIPERIDINDERIVATEN
NANOPARTICULES DE SILICIUM FONCTIONNALISÉES PAR UN DÉRIVÉ DE PIPÉRIDINE À ENCOMBREMENT

(30) Priority: 10.02.2023 US 202363444592 P
(43) Date of publication of application: 26.11.2025
(73) Proprietor: Dow Silicones Corporation, Midland, MI 48686-0994 (US)
(72) Inventor: CASEY, James A., Midland, Michigan 48640 (US); WITKER, David, Midland, Michigan 48640 (US)
(74) Representative: Beck Greener LLP
(86) International application number: PCT/US2024/013981
(87) International publication number: WO 2024/167757

(56) References cited:
- WO-A1-2020/205850
- CN-A- 115 558 200
- US-B1- 11 552 334
- ZHOU ET AL., NANO LETT, vol. 15, 2015, pages 3657 - 3663, XP002811646

## Description

### Field of the Invention

The present invention relates to silicon quantum dots that have hindered piperidine derivative free radical scavengers on their surface and a method of their manufacture.

### Introduction

The advent of nanotechnology is resulting in a paradigm shift in many technological arts because the properties of many materials change at nanoscale dimensions. For example, decreasing the dimensions of some structures to nanoscales can increase the ratio of surface area to volume, thus causing changes in the electrical, magnetic, reactive, chemical, structural, and thermal properties of the material. Nanomaterials are already being found in commercial applications and will likely be present in a wide variety of technologies including computers, photovoltaics, optoelectronics, medicine/pharmaceuticals, structural materials, military applications, and many others within the next few decades.

Silicon nanoparticles are of particular interest. An important characteristic of small silicon nanoparticles (less than 10 nanometer (nm) average size) is that these particles are photoluminescent in visible and near infrared light when stimulated by shorter wavelength light (such as ultraviolet light). This is thought to be caused by a quantum confinement effect that occurs when the diameter of the nanoparticle is smaller than the exciton diameter, which results in bandgap bending (that is, increasing of the gap). Researchers have shown how the bandgap energy (in electron volts) of a nanoparticle changes as a function of the diameter of the nanoparticle.

Although silicon is an indirect bandgap semiconductor in bulk, silicon nanoparticles with average sizes less than 10 nm emulate a direct bandgap material, which is made possible by interface trapping of excitons. Direct bandgap materials can be used in optoelectronics applications as silicon quantum dot materials. Silicon quantum dots are particularly desirable over other quantum dot materials because they do not require environmentally unfriendly components such as lead, selenium, cadmium, indium, or arsenic. Another interesting property of nanomaterials is the lowering of the melting point following the surface-phonon instability theory. Researchers have shown that the melting point of a nanomaterial formed of nanoparticles changes as a function of the diameter of the nanoparticle.

It is desirable to develop silicon nanoparticle technology, particularly silicon quantum dot technology to control optical properties of the silicon quantum dots. It is especially desirable to be able to control optical properties of a fully passivated silicon quantum dot that is stable to exposure to air.

### BRIEF SUMMARY OF THE INVENTION

The present invention provides a method for modifying the optical properties of silicon quantum dots. Surprisingly, the present invention provides a method for blue-shifting the luminescence emission of silicon quantum dots by functionalizing the surface of silicon quantum dots with piperidine derivative free radical scavengers. Some researchers have demonstrated an ability to red-shift emission wavelengths of silicon quantum dots by as much as a 70 nanometer red-shift by complexing an aromatic organic ligand onto the surface of the silicon quantum dot. See, Zhou et al. Nano Lett. 2015, 15, 3657-3663 and Li et al., Phys. Chem. Chem. Phys., 2014, 16, 19275-19281. Blue-shifting the luminescence emission of silicon quantum dots is surprising over such results.

An even more surprising benefit is the present discovery that functionalizing the surface of silicon nanoparticle quantum dots with piperidine derivative free radical scavengers dramatically reduces the time needed to passivate the silicon nanoparticles thereby reducing the time required to produce air-stable silicon nanoparticles, including silicon quantum dots. Even more beneficial is that the present invention provides a process for preparing such functionalized silicon nanoparticles in a continuous process by functionalizing the silicon nanoparticles as they are made and dispersed into a capture fluid. The silicon nanoparticles can then be passivated in the capture fluid, a process that typically takes multiple days at 60 degrees Celsius (°C) and 85% relative humidity (RH) at 101 kiloPascals pressure (atmospheric pressure), but once functionalized with a piperidine derivative free radical scavenger can occur in a matter of a few hours under the same conditions.

In a first aspect, the present invention is a composition comprising silicon nanoparticles, wherein the silicon nanoparticles comprise hindered piperidine derivative free radical scavengers on the surfaces of the silicon nanoparticles.

In a second aspect, the present invention is a process for making silicon nanoparticles with hindered piperidine derivative free radical scavengers on the surface of the silicon nanoparticle, the process comprising producing silicon nanoparticles using a very high frequency low pressure plasma (VHFLPP) process that collects silicon nanoparticles in a capture fluid as they are made and wherein hindered piperidine derivative free radical scavengers are provided in the capture fluid prior to, during and/or after collecting silicon nanoparticles and prior to exposing the silicon nanoparticle to air so that the silicon nanoparticles and hindered piperidine derivative free radical scavengers are present in the capture fluid together.

### BRIEF DESCRIPTION OF DRAWINGS

Figure 1 illustrates a schematic of the VHFLPP set up for preparing the Samples herein.
Figure 2 displays the photoluminescence emission (PL) spectra of Samples 1-3 when excited at 365 nm at different passivation/aging times.
Figure 3 displays the photoluminescence excitation (PLE) spectra for Samples 1-3.
Figure 4 displays the UV-Vis absorbance spectra as a function of passivation/aging time for Samples 1-3.
Figure 5 displays the photoluminescence emission (PL) for Samples 4-6.
Figure 6 displays the photoluminescence excitation (PLE) spectra for Samples 4-6.
Figure 7 displays the UV-Vis absorbance spectra of Samples 4-6.
Figure 8 displays the photoluminescence emission spectra (PL) for Samples 4-6.
Figure 9 displays the photoluminescence excitation (PLE) spectra for Samples 4-6.
Figure 10 displays the UV-Vis absorbance spectra of Samples 9 and 10.
Figure 11 displays the photoluminescent emission spectra (PL) for Samples 9 and 10.
Figure 12 displays the photoluminescent excitation spectra (PLE) for Samples 9 and 10.

### DETAILED DESCRIPTION OF THE INVENTION

Products identified by their tradename refer to the compositions available under those tradenames on the priority date of this document.

"Multiple" means two or more. "And/or" means "and, or as an alternative". All ranges include endpoints unless otherwise indicated.

"Cx to Cy", "Cₓ-C_{y}", "C_{x-y}" are interchangeable and refer to a composition having a number of carbon atoms in a range of from x to y.

"Silicon nanoparticle" refers to a silicon-based particle having an average particle size of less than one micrometer, typically a particle size of 100 nanometers (nm) or less, while at the same time having an average particle size of one or more than one nm. Dynamic light scattering or transmission electron microscopy image analysis are common ways to determine average particle size for silicon nanoparticles. Silicon nanoparticles include silicon quantum dots.

"Silicon-based" refers to a composition comprising silicon. A silicon-based material generally contains 40 percent (%) or more, and can contain 50 % or more, 60 % or more, 70% or more, 80 % or more, 90% or more, even 100 % silicon atoms or a combination of silicon and oxygen atoms based relative to all atoms in the material.

"Silicon quantum dots" refer to silicon nanoparticles that have a crystalline silicon structure and that photoluminesces when exposed to light. Typically, silicon quantum dots have an average particle size that is in a range of one to 10 nanometers, preferably in a range of one to 6 nanometers, more preferably in a range of one to 5 nanometers. Silicon quantum dots are characterized by the fact that they luminesce when exposed to light having a wavelength in a wavelength range of 300 to 477 nanometers, corresponding to blue and ultraviolet light.

In one aspect, the present invention is a composition comprising silicon nanoparticles comprising hindered piperidine derivative free radical scavengers on the surface of the silicon nanoparticles thereby forming a hindered piperidine derivative functionalized silicon nanoparticles. The composition can consist of the silicon nanoparticles or comprise other components in addition to the silicon nanoparticles. The silicon nanoparticles desirably include and can be silicon quantum dots.

The hindered piperidine derivative free radical scavengers can be the same or can be a combination or more than one hindered piperidine derivative free radical scavenger. Desirably, the hindered piperidine derivative free radical scavengers are non-aromatic, meaning they are free of aromatic rings. Examples of suitable piperidine derivative free radical scavengers include any one or any combination of more than one selected from a group consisting of bis(1,2,2,6,6-pentamethyl-4-piperidyl) sebacate; bis(1-octyl-2,2,6,6,-tetramethyl-4-piperidyl) sebacate; bis(2,2,6,6-tetramethyl-4-piperidyl) sebacate; and 4-hydroxy-2,2,6,6-tetramethylpiperidine 1-oxyl benzoate.

The hindered piperidine derivative free radical scavengers are on the surface of the silicon nanoparticles and thereby "functionalize" the silicon nanoparticles. The hindered piperidine derivative free radical scavengers can be chemically bound to the silicon nanoparticles, such as through covalent bonding. However, it is desirable to be free of aromatic conjugation between the hindered piperidine derivative free radical scavengers and the silicon nanoparticles. That is, it is desirable for the hindered piperidine derivative free radical scavenger functionalized silicon nanoparticles to be free of conjugated functionality in the hindered piperidine derivative being bonded directly to the silicon nanoparticles. The hindered piperidine derivative free radical scavenger functionalized silicon nanoparticles can be free of conjugated organic groups altogether. The present invention also covers hindered piperidine derivative functionalized silicon nanoparticles where the hindered piperidine derivative functionalized free radical scavengers adhere to the surface of the silicon nanoparticles without chemically bonding to the silicon nanoparticles. Adherence without chemically bonding can occur by electrostatic attraction, or any other non-chemical bonding means.

The silicon nanoparticles can further comprise passivating groups on their surfaces in addition to hindered piperidine derivative free radical scavengers. Passivating groups can be any or combination of more than one group that protects the silicon nanoparticle from decomposition when exposed to oxygen in the air and moisture. For example, the silicon nanoparticles can comprise an oxide coating over its surface in combination with the hindered piperidine derivative free radical scavengers. The oxide coating protects the silicon nanoparticle from decomposition upon exposure to oxygen in the air and moisture.

Silicon quantum dots that are hindered piperidine derivative functionalized surprisingly demonstrate a blue shift in luminescence emission wavelengths (that is, a shift to shorter wavelength emissions) relative to identical silicon quantum dots that are not hindered piperidine derivative functionalized. Moreover, formation of an oxide passivation coating on the surface of the silicon nanoparticles that are hindered piperidine derivative functionalized surprisingly occurs sufficiently to protect the silicon nanoparticles from decomposition when exposed to air in a matter of hours rather than a matter of days when passivated in a capture fluid at 60 degrees Celsius (°C) and 85% relative humidity (RH) at 101 kiloPascals pressure (atmospheric pressure).

In a second aspect, the present invention is a method for preparing the hindered piperidine derivative functionalized silicon nanoparticles of the first aspect. The process comprises producing silicon nanoparticles using a very high frequency low pressure plasma (VHFLPP) process that collects silicon nanoparticles in a capture fluid as they are made and wherein the capture fluid has dispersed therein hindered piperidine derivative free radical scavengers. When the silicon nanoparticles enter the capture fluid the hindered piperidine derivative free radical scavengers adhere to the surfaces of the silicon nanoparticles while in the capture fluid. The hindered piperidine derivative free radical scavengers are as described herein above.

The VHFLPP is a generally known process for making nanoparticles, and in the case of the present application silicon nanoparticles including silicon quantum dots. The VHFLPP process provides capability to provide better control over particle size and size distribution when producing nanoparticles than other processes for making nanoparticles offer. Examples of VHFLPP processes are taught in prior art, including in US2013/0189446, US2012/0326089 and WO2020/205850. A basic description of the VHFLPP process follows.

The VHFLPP process uses a gas stream comprising at least one nanoparticle precursor that flows through a quartz tube at a pressure below 13,333 Pascals (Pa). To make silicon nanoparticles, the nanoparticle precursor is or comprises a silicon-containing material typically selected from a group consisting of silanes, disilanes, halogen-substituted silanes, halogen-substituted disilanes, C1 to C4 alkyl silanes, C1 to C4 alkyl disilanes and mixtures of any combination thereof. The gas stream can contain additional precursors (dopants) that typically contain a component, or any combination of components selected from a group consisting of halogens, germanium, boron, phosphorus and nitrogen. The combined concentration of nanoparticle precursor and dopant in the gas stream typically ranges from 0.1 to 50 percent by volume (vol%) relative to the gas stream composition. The balance of the gas stream is primarily one or a combination of more than one inert gas such as argon (Ar), Helium (He), Neon (Ne), Krypton (Kr), Xenon (Xe), and Radon (Rn).

Exterior and concentric to the quartz tube are two ring electrodes, typically copper ring electrodes separated from one another with one ring electrode "upstream" (relative to the gas stream) with respect to the other ring electrode. A plasma is created within the quartz tube by powering the upstream ring electrode with a radio frequency source while grounding the other ring electrode. The radio frequency is a very high frequency (typically ranging from 30 to 500 Megahertz) and is coupled to a power typically ranging from 80 to 1000 Watts.

The nanoparticle precursor breaks down, nucleates and grows into nanoparticles as it flows through the plasma. The pressure at the plasma is 6666 Pascals (Pa) or less, and preferably 667 Pa or less while at the same time is typically 133 Pa or more.

The nanoparticles continue to flow in the gas stream and exit the quartz tube through an orifice into a collection chamber. The collection chamber is at a pressure of less than 13.33 Pascals (Pa) while the gas stream is flowing. When the gas stream is not flowing, the collection chamber is typically at a pressure of 6.67 x 10⁻⁵ Pa.

A capture fluid reservoir that contains a capture fluid resides in the collection chamber with the gas stream directed at the capture fluid. The distance between the surface of the capture fluid and the orifice of the quartz tube is desirably in a range of 5 to 50 orifice diameters. The gas stream containing nanoparticles impinges the surface of the capture fluid thereby introducing the nanoparticles into the capture fluid where the nanoparticles collect during the VHFLPP process. Typically, in order to assist dispersing the nanoparticles in the capture fluid, the capture fluid is agitated (for example, stirred or subjected to ultrasonic agitation) during nanoparticle collection and/or the reservoir containing the capture fluid rotates during nanoparticle collection. After capture is complete, it is also helpful to sonicate the capture fluid containing the nanoparticles to facilitate dispersing of the nanoparticles.

The capture fluid should have a vapor pressure sufficiently low so as to remain primarily intact in the reservoir within the collection chamber during the VHFLPP process. The capture fluid is desirably non-aqueous. Examples of suitable capture fluids include mineral oil, as well as silicone oils (such as polydimethylsiloxane (PDMS), phenyl methyl-dimethyl cyclosiloxane, tetramethyltetraphenyltrisiloxane, and pentaphenyltrimethyltrisiloxane), fluorocarbons and alkylene oxide oils. The capture fluid can be a blend of more than one fluid. Additional desirable properties and examples of suitable capture fluids are taught in WO2020/205850 in paragraphs [0070] to [0077] , which teachings are incorporated herein by reference as desirably applying to the capture fluid of the present invention.

The silicon nanoparticles become functionalized with hindered piperidine derivative free radical scavengers while in the capture fluid. Such functionalization occurs merely by having the silicon nanoparticles and the hindered piperidine derivative free radical scavengers present together in the capture fluid. The hindered piperidine derivative free radical scavengers adheres to the surface of the silicon nanoparticles to functionalize the silicon nanoparticle surfaces. Hindered piperidine derivative free radical scavengers are provided in the capture fluid prior to, during and/or after collecting silicon nanoparticles so that the silicon nanoparticles and hindered piperidine derivative free radical scavengers are present in the capture fluid together. For instance, the capture fluid can contain the hindered piperidine derivative free radical scavengers as the silicon nanoparticles are collected in the capture fluid during the VHFLPP process. Alternatively, or additionally, hindered piperidine derivative free radical scavengers can be added to the capture fluid containing the silicon nanoparticles after the silicon nanoparticles have been collected in the capture fluid and prior to exposing the silicon nanoparticles to air. Desirably, provide sufficient hindered piperidine derivative free radical scavenger to obtain a concentration of 0.1 weight-percent (wt%) or more, preferably 0.5 wt% or more, 1.0 wt% or more, 2.0 wt% or more, 3.0 wt% or more, 4.0 wt% or more, even 5.0 wt% or more while at the same time typically 10 wt% or less, 9 wt% or less, 8 wt% or less, 7 wt% or less, 6 wt% or less, even 5 wt% or less hindered piperidine derivative free radical scavenger based on the combined weight of hindered piperidine derivative free radical scavenger and capture fluid.

The capture fluid can provide a protective medium for storage and controlled passivation of the hindered piperidine derivative functionalized silicon nanoparticles. Silicon nanoparticles can rapidly degrade if exposed directly to moist air. However, an oxide layer can form in a controlled manner by exposing the silicon nanoparticles in the capture fluid to moist air at a controlled temperature as moisture and oxygen slowly penetrate the capture fluid and react with the silicon nanoparticle surfaces to form an oxide. Once passivated, the silicon nanoparticles can be isolated from the capture fluid without risk of rapid degradation. One way to conduct passivation of silicon nanoparticles in a capture fluid is subject the nanoparticles and capture fluid to a temperature preferably greater than 25 °C, typically a temperature of 65 °C or close thereto, in air (preferably at 85% relative humidity) for a period of time. The passivation process generally takes 12 to 72 hours or even longer, and in some cases 168 hours or longer without the hindered piperidine derivative free radical scavenger. However, it has been discovered that passivation of the hindered piperidine derivative functionalized silicon nanoparticles can occur in a matter of a few hours or less. Determine when passivation is done by examining the photoluminescence emission intensity of the particles with a Fluorolog FL-3 instrument using an excitation and emission slit width of 2 nm and an integration time of 0.1 second per nm. Excite the particles with 365 nm wavelength light. Passivation is complete when the peak emission wavelength ceases to significantly change. The peak emission intensity is typically greater than 60 x 10⁶ counts at the peak emission wavelength as measured with the Fluorolog FL-3 instrument. The peak emission wavelength is considered to cease significantly changing and passivation is considered complete when the change in peak emission wavelength is less than 10 nm per day.

Hindered piperidine derivative functionalized silicon nanoparticles can be isolated from the capture fluid, preferably after passivation. Method of isolating the hindered piperidine derivative functionalized silicon nanoparticles from the capture fluid include, for example, filtration and centrifugation with decantation. If the hindered piperidine derivative functionalized silicon nanoparticles have been passivated then isolation from the capture fluid can be done in air. If the hindered piperidine derivative functionalized silicon nanoparticles are not passivated prior to isolation from the capture fluid then isolation should be done in an inert atmosphere such as a dry nitrogen or dry noble gas atmosphere.

It is possible to recycle or reuse a capture fluid in VHFLPP processes. That is, nanoparticles can be collected in the same capture fluid for multiple runs of the VHFLPP process. Typically, nanoparticles are isolated from the capture fluid prior to reusing the capture fluid, but that is not necessary. For example, nanoparticles can be collected in a capture fluid, passivated and then isolated from the capture fluid (for example, by filtration or centrifugation). The remaining capture fluid can then be used in a subsequent VHFLPP process.

The VHFLPP process can be run as a continuous or a pulsed process. A continuous VHFLPP process uses a constant and continuous radio frequency on the upstream ring electrode. In contrast, a pulsed VHFLPP process uses an amplitude modulated very high frequency (VHF) radio frequency signal applied to the upstream ring electrode. The amplitude modulated signal is typically operated from 1 to 50 Kilohertz as a square wave wavefunction that is multiplied to the continuous VHF sinusoidal waveform. Advantages to a pulsed process include using pulsed energy to control the size of the nanoparticles produced by controlling the residence time nanoparticle precursors are exposed to the high power plasma as they pass through the VHF glow discharge. In a continuous VHF plasma process (non-modulated), nanoparticle size can be controlled by the concentration of the nanoparticle precursor, silicon in the case of silicon nanoparticles and the residence time of the precursor through the VHF plasma.

### Examples

For the following examples, use the following VHFLPP set up and procedure.

### VHFLPP Set Up

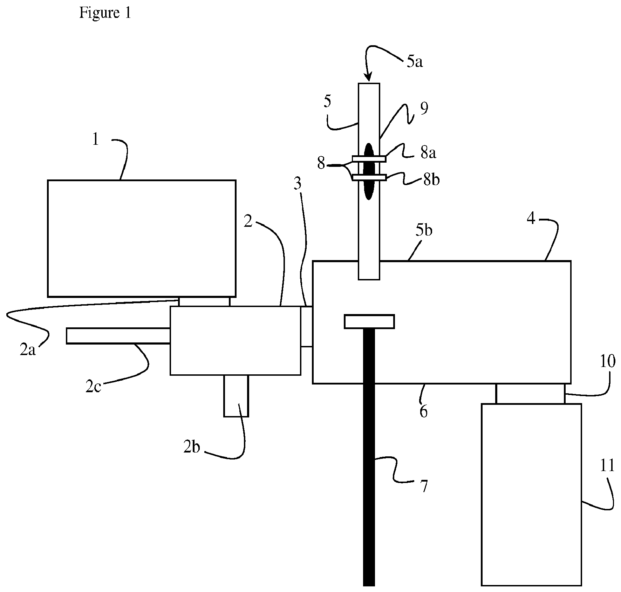

Figure 1 illustrates a schematic of the VHFLPP set up for the present examples. Prepare samples in an inert environment such as a glove box, 1, that is purged with nitrogen gas. Connected to the glove box **1** is a vacuum load lock, **2.** Samples can transfer from the inert gas purged glove box to the vacuum load lock upon opening a vacuum load lock seal, **2a,** between the gas purged glove box and vacuum load lock. A roughing pump, **2b,** is in fluid communication with the vacuum load lock. A rack and pinion arm, **2c,** allows moving of items between the load lock **2** into a main capture chamber, **4.** The vacuum load lock is separated from a main capture chamber, **4,** by a gate valve **3.** When gate valve **3** is open the vacuum load lock is in fluid communication with the main capture chamber. When gate valve **3** is closed then the vacuum load lock is isolated from the main capture chamber. The main capture chamber is connected to a high vacuum pump, **11,** through gate valve **10.** High vacuum pump **11** is a turbo-molecular pump (pump rate of 600 liters per second) that is backed by a roughing pump (Ebara S50 semiconductor pump with pump rate of 5,000 liters per minute. The main capture chamber is also in fluid communication with an upstream dielectric discharge tube, **5,** through a dielectric discharge tube orifice, **5b.** The dielectric discharge tube is a high purity fused quartz tube with a 7 millimeter inside diameter, 9.6 millimeter outside diameter and a length of 23 centimeters. Extending into the main capture chamber through a seal is capture fluid reservoir holder, 7, which holds capture fluid reservoir **6.** The capture fluid reservoir holder can move towards or away from the dielectric discharge tube orifice in order to allow a user to position the capture fluid reservoir at a desired distance from the dielectric discharge tube orifice. During operation of the VHFLPP process, a gas stream comprising a precursor gas (or gasses) and an inert carrier gas (or gasses) flows into entrance end **5a** of dielectric discharge tube **5,** through the dielectric discharge tube and into the main collection chamber **4** through dielectric discharge tube orifice **5b.** The diameter of the dielectric tube orifice is desirably adjustable in diameter and is adjusted to produce a pressure ratio of (discharge tube pressure)/(main capture chamber pressure) of 500 or more. The dielectric discharge tube has around it two electrodes, **8a** and **8b,** of dual ring copper electrode, **8.**

### VHFLPP Process Operation

Produce silicon nanoparticles using the VHFLPP process and set up described herein above as follows. Within the glove box, place a capture fluid into the capture fluid reservoir and as indicated for a specific example, an octadecene or a Hindered Piperidine Derivative into the capture fluid. Transfer the capture fluid through the load lock barrier and into the load lock. Seal the load lock and evacuate the load lock using a roughing pump to a pressure of less than 2.67 Pa. Evacuate the main capture chamber using the high vacuum pump to a pressure of less than 6.67 x 10⁻⁵ Pa. Open gate valve **3** and transfer the capture fluid reservoir from the load lock and onto the capture fluid reservoir holder **7** in the main capture chamber using a rack and pinion transfer arm **2c.** Close gate valve **3** and draw the pressure of the main capture chamber down to less than 6.67 x 10⁻⁵ Pa. Move the capture fluid reservoir holder to position the capture fluid reservoir a desired distance below the dielectric discharge tube orifice. Rotate the capture fluid reservoir holder (and, consequently, the capture fluid reservoir) at a rate of 12 revolutions per minute.

Feed a gas stream into end **5a** of the dielectric discharge tube by metering in desired gases. Each example below identifies the composition of the desired gases making up the stream and their relative flow rates. Feed the gasses together into end **5a** of the dielectric discharge tube to create the gas stream through the dielectric discharge tube.

Generate a very high frequency plasma **9** in the dielectric discharge tube between electrodes **8a** and **8b** while flowing the gas stream flowing through the dielectric discharge tube by applying a sine wave to the electrodes. Generate the sine wave with a Tektronix AFG 3252 function generator and an Electronic and Innovation 3200L Class A radio frequency amplifier connected to the electrodes. The sine wave across the electrodes produces a capacitively coupled very high frequency (frequency from 90-500 Megahertz) plasma within the dielectric discharge tube. Tune the frequency source to provide the maximum power coupled into the plasma while minimizing the drive amplitude of the sine wave. The coupled power density of the plasma is greater than 130 Watts per square centimeter (W/cm²).

Silicon nanoparticles form in the plasma and exit the dielectric discharge tube through orifice **5b** and are collected in the capture fluid in the capture fluid reservoir.

When done collecting silicon nanoparticles transfer the capture fluid reservoir with the capture fluid containing the silicon nanoparticles back to the inert glove box using the transfer arm through the load lock. Transfer the capture fluid and silicon nanoparticles to a glass vial and seal with polytetrafluoroethylene cap and electrical tape. Remove the glass vial from the glove box and sonicate for 30 minutes using a benchtop ultrasonic bath (40 kiloHertz) to help disperse any agglomerated particles.

Passivate the silicon nanoparticles by placing the silicon nanoparticle coated solid substrate, while in the capture fluid, at an aging temperature and aging humidity for an aging time as reported herein below.

### Sample Photoluminescence (PL) Spectra

Silicon nanoparticles luminesce when exposed to ultraviolet radiation only if they have a particle size in a range of 1 to 10 nanometers. Therefore, observation of luminescence is one means to confirm the silicon nanoparticles are silicon quantum dots. Use the following procedure to detect luminescence and characterize that luminescence for the samples described hereinbelow.

Create a sample by adding a portion of the silicon nanoparticles in the capture fluid, which is in the form of a dispersion, into a poly(methyl methacrylate) cuvette with a 1 centimeter (cm) pathlength. Place the cuvette into the sample holder of a Horiba Fluorolog-3 Spectrophotometer (FL3-22), which comprises a 450 Watt Xenon excitation lamp that illuminates the sample after passing through a double grating (1200 groove/millimeter with a 330 nm blaze) excitation spectrometer to select the excitation wavelength. Excitation photons enter the sample compartment housing the sample and are directed to the sample. The sample compartment has front facing optics to measure the sample's photoluminescent emission at approximately 45 degrees relative to the excitation photons. Direct emission photons to a double grating (1200 grooves/millimeter with a 500 nm blaze) emission spectrometer and project onto a Hamamatsu R928P photomultiplier tube. Correct the emission signal to gratings and detector specifications (from the vendor). Excitation and emission slits are at 2 nm with integration time of 100 milliseconds per nm. The FL3-22 instrument is used to measure photoluminescence emission and excitation spectra. The emission (PL) spectra, which is the photoluminescence (PL) spectra, typically use an excitation wavelength of 365 nm and scans the emission wavelength. Measure the photoluminescent excitation (PLE) spectra by setting the emission wavelength constant (for example, 700 nm) and scanning the excitation wavelength from 280 to 550 nm while measuring the signal intensity at the selected emission wavelength.

### Sample Absorbance Spectra

Measure the absorbance of the samples as follows:
For Examples 1, 2 and 3 use a Shimadzu UV2600i spectrophotometer, which is a dual beam spectrophotometer. In the path of one beam (sample beam) place a poly(meth acrylate) cuvette with a 1 cm pathlength containing a sample dispersion of silicon nanoparticles in the capture fluid. In the path of the other beam (reference beam) place a (meth acrylate) cuvette with a 1 cm pathlength containing only the capture fluid. Deuterium and tungsten-halogen laps excite the sample and reference over a wavelength of 280 to 800 nm with a 1 nm bandwidth. Use a Czerny-Turner optical system to focus the transmitted light onto a silicon diode. Plot the absorption of the excitation photons by the nanoparticles in the sample at each wavelength to obtain the sample's absorbance spectrum.

For Examples 4-8, collect an absorbance spectrum in like manner using a Shimadzu UV-1800 spectrophotometer.

No absorbance spectra were measured for Examples 9-12 but they can be collected in like manner as any of the other Examples.

### Samples

Prepare the following samples following the aforementioned procedure and the parameters in the tables below. Characterization of the samples are included in the tables below. Table 1 lists elements for making each of the samples.

**Table 1**

| **Component** | **Description** | **Source** |
|---|---|---|
| Nanoparticle Precursor | SiH₄/Ar (2% SiH₄ by mass in Ar) | Air Liquide as SiH4-EG2 (99.999%)/Ar-EG3 (99.9999%) 2% by mass. |
| Ar Carrier Gas | Argon (99.9999%) | Air Liquide as Argon-EG3 (99.9999%) |
| H₂ Carrier Gas | Hydrogen (99.999%) | Air Liquide as Hydrogen-EG1 (99.999%) |
| Light Mineral Oil | Light mineral oil | Fisher Chemical as CAS: 8042-47-5 light mineral oil |
| Octadecene | Octadecene | 1-octadecene, CAS no. 112-88-9 from Millipore Sigma (cat. No. 7470) |
| Hindered Piperidine Derivative (HPD) 1 | Bis(1,2,2,6,6-pentamethylpiperidin-4-yl) decanedioate | CAS No. 41556-26-7 |
| | | Supplier: Millipore Sigma |
| | | Catalog No. AMB3155FCD7 |
| Hindered Piperidine Derivative (HPD) 2 | Bis(1-octyloxy-2,2,6,6-tetramethylpiperid-4-yl) sebacate | CAS No. 129757-67-1 |
| | | Supplier: Millipore Sigma |
| | | Catalog No. 535761 |

Table 2 lists the parameters for preparing the samples. Table 3 identifies further parameters for use in preparing samples. A brief description of each sample is provided prior to Table 2.

***Sample 1 and Sample 9:*** The capture fluid is light mineral oil. Sample 1 is a comparative example to Sample 3. Sample 9 is a comparative example to Sample 10.

***Sample 2:*** The capture fluid is light mineral oil with 5 wt% Octadecene. Sample 2 is a comparative example to Sample 3.

***Samples 3 and 10:*** The capture fluid is light mineral oil with 5 wt% HPD 1. Prepare Sample 3 under similar conditions as Samples 1 and 2. Sample 10 is half the mass of Sample 9 with HDP 1 added at 5 wt% prior to exposure to air but after sonicating Sample 9 at 40 kiloHertz for 10 minutes.

***Samples 4 and 5:*** The capture fluid is light mineral oil with 5 wt% Octadecene. Sonicate the sample at 40 kiloHertz for 20 minutes and split in to two samples with one serving as Sample 4 and one as Sample 5 prior to passivating. Passivate Sample 4. To Sample 5 add 5 wt% HPD 1 and sonicate Sample 5 for another 30 minutes prior to passivating.

***Sample 6:*** the capture fluid for Sample 6 is light mineral oil with 5 wt% HPD 2. This sample has similar processing conditions as Sample 4 (comparative example).

***Samples 7 and 8:*** For Sample 7 the capture fluid is light mineral oil with 5 wt% HPD 1. Sonicate the sample at 40 kiloHertz for 20 minutes and split in to two samples with one serving as Sample 7 and one as Sample 8. Passivate Sample 7 at 25 °C and 50 % Relative Humidity for 3 days. Passivate Sample 8 at 60 °C and 85% Relative Humidity for 3 days. The difference between Samples 7 and 8 is the temperature and Relative Humidity for passivating.

**Table 2**

| **Sample** | **Capture Fluid Composition** | **Gas Flow Rate (standard cubic centimeter per minute)** | | | | **Pressure (Pa)** | | **Capture Fluid Distance from Orifice (cm)** | **Deposition Time (minutes)** |
|---|---|---|---|---|---|---|---|---|---|
| | | **Ar** | **Nanoparticle Precursor (SiH₄/Ar blend)** | **H₂** | **Cl₂** | **Dielectric Discharge Tube** | **Main Capture Chamber** | | |
| 1 | Mineral Oil | 100 | 40 | 5 | 0 | 447 | 0.36 | 3 | 75 |
| 2 | Octadecene (5 wt.%) in MO | 100 | 40 | 5 | 0 | 447 | 0.36 | 3 | 75 |
| 3 | HPD 1 (5wt%) in MO | 100 | 40 | 5 | 0 | 447 | 0.36 | 3 | 75 |
| 4 | Octadecene (5 wt.%) in MO | 60 | 60 | 5 | 0 | 421 | 0.27 | 3 | 77 |
| 5 | HPD 1 (5wt.%) added to Ex 4 after sonication prior to air exposure | 60 | 60 | 5 | 0 | 421 | 0.27 | 3 | 77 |
| 6 | HPD 2 (5wt%) in MO | 60 | 60 | 5 | 0 | 415 | 0.28 | 3 | 60 |
| 7 | HPD 1 (5wt%) in MO | 80 | 40 | 5 | 0 | 425 | 0.28 | 6.5 | 70 |
| 8 | HPD 1 (5wt%) in MO | 80 | 40 | 5 | 0 | 425 | 0.28 | 6.5 | 70 |
| 9 | Mineral Oil | 60 | 60 | 5 | 0 | 416 | 0.27 | 3 | 60 |
| 10 | HPD 1 (5wt,%) added to Ex 9 after sonication prior to air exposure | 60 | 60 | 5 | 0 | 416 | 0.27 | 3 | 60 |

**Table 3**

| **Sample** | **Frequency (MHz)** | **Drive Amplitude (mVpp)*** | **Power (W)** | | | **Power Density (W/cm²)** | **Power Coupling Efficiency (%)** | **Passivation** | | |
|---|---|---|---|---|---|---|---|---|---|---|
| | | | ***Forward*** | ***Reflected*** | ***Coupled*** | | | ***Aging Temp (°C)*** | ***Aging Humidity (%R.H.)*** | ***Aging Time (days)*** |
| 1 | 129 | 312 | 195 | 64 | 131 | 183.7 | 67.2 | 60 | 85 | 7 |
| 2 | 129 | 316 | 194 | 63 | 131 | 183.7 | 67.5 | 60 | 85 | 7 |
| 3 | 129 | 308 | 196 | 64 | 132 | 185.1 | 67.3 | 60 | 85 | 3 |
| 4 | 129 | 300 | 178 | 60 | 118 | 165.5 | 66.3 | 60 | 85 | 3 |
| 5 | 129 | 300 | 178 | 60 | 118 | 165.5 | 66.3 | 60 | 85 | 3 |
| 6 | 129 | 300 | 177 | 59 | 118 | 165.5 | 66.7 | 60 | 85 | 5 |
| 7 | 129 | 300 | 182 | 61 | 121 | 169.7 | 66.5 | 23 | 55 | 3 |
| 8 | 129 | 300 | 182 | 61 | 121 | 169.7 | 66.5 | 60 | 85 | 3 |
| 9 | 129 | 300 | | 60 | 119 | 166.9 | 66.5 | 60 | 85 | 7 |
| 10 | 129 | 300 | 179 | 60 | 119 | 166.9 | 66.5 | 60 | 85 | 3 |

| | | | | | | | | | | |
|---|---|---|---|---|---|---|---|---|---|---|
| *mVpp = millivolt peak-to-peak. | | | | | | | | | | |

Table 4 contains a summary of the photoluminescence characteristics for the samples. Table 4 contains characteristics for each Ex measured after different passivation aging times. Terms in Table 4 are as follows:
***PL λ peak*:** the peak wavelength of the maximum emission photoluminescence intensity of the silicon nanoparticles measured after passivating for the Aging Time when excited at 365 nm.

***λ FWHM:*** the full width at half maximum of the emission photoluminescence of the silicon nanoparticles in the capture fluid measured after passivating for the Aging Time when excited at 365 nm.

**PL Emission Intensity (x10⁶ counts):** the peak photoluminescence intensity of the silicon nanoparticles in the capture fluid measured after passivating for the Aging Time when excited at 365 nm at the PL l peak (Excitation and Emission monochromator slit widths of 2 nm and integration time of 0.1 seconds / nm).

***Eg:*** the optical bandgap from the peak photoluminescence emission photoluminescence spectrum of the silicon nanoparticles in the capture fluid measured after passivating for the Aging Time when excited at 365 nm.

***σEg*:** the standard deviation of the optical bandgap from the peak photoluminescence emission spectrum of the silicon nanoparticles in the capture fluid measured after passivating for the Aging Time when excited at 365 nm.

**Table 4**

| **Sample** | **Aging Time (day)** | **PL λ peak (nm)** | **λ FWHM (nm)** | **PL Emission Intensity (x10⁶ counts)** | **Eg (eV)** | **σ Eg (eV)** |
|---|---|---|---|---|---|---|
| 1 | 1 | 771 | 130 | 14 | 1.612 | 0.119 |
| | 2 | 753 | 129 | 32 | 1.653 | 0.122 |
| | 5 | 717 | 128 | 79 | 1.737 | 0.132 |
| | 6 | 708 | 127 | 95 | 1.759 | 0.135 |
| | 7 | 701 | 127 | 97 | 1.777 | 0.138 |
| 2 | 1 | 756 | 130 | 17 | 1.645 | 0.123 |
| | 2 | 741 | 130 | 29 | 1.68 | 0.127 |
| | 3 | 727 | 128 | 57 | 1.713 | 0.129 |
| | 4 | 723 | 128 | 59 | 1.723 | 0.13 |
| | 7 | 717 | 128 | 72 | 1.737 | 0.133 |
| 3 | 1 | 611 | 125 | 8 | 2.042 | 0.181 |
| | 2 | 617 | 136 | 90 | 2.022 | 0.195 |
| | 3 | 609 | 133 | 96 | 2.051 | 0.196 |
| 4 | 1 | 698 | 149 | 31 | 1.798 | 0.16 |
| | 2 | 696 | 151 | 52 | 1.804 | 0.163 |
| | 3 | 694 | 150 | 62 | 1.8 | 0.167 |
| 5 | 1 | 664 | 150 | 44 | 1.894 | 0.179 |
| | 2 | 656 | 152 | 99 | 1.916 | 0.185 |
| | 3 | 650 | 154 | 140 | 1.921 | 0.198 |
| 6 | 1 | 652 | 133 | 13 | 1.913 | 0.169 |
| | 2 | 644 | 140 | 49 | 1.939 | 0.183 |
| | 5 | 635 | 146 | 111 | 1.969 | 0.198 |
| 7 | 1 | 660 | 136 | 0.2 | 1.897 | 0.158 |
| | 2 | 651 | 131 | 0.4 | 1.924 | 0.153 |
| | 3 | 647 | 130 | 1 | 1.935 | 0.156 |
| 8 | 1 | 627 | 137 | 41 | 2.004 | 0.187 |
| | 2 | 629 | 144 | 110 | 1.999 | 0.195 |
| | 3 | 626 | 146 | 124 | 1.995 | 0.203 |
| 9 | 1 | 696 | 163 | 21 | 1.794 | 0.181 |
| | 2 | 688 | 154 | 49 | 1.815 | 0.175 |
| | 3 | 682 | 151 | 82 | 1.83 | 0.175 |
| | 4 | 673 | 151 | 99 | 1.854 | 0.18 |
| | 7 | 663 | 153 | 154 | 1.885 | 0.189 |
| 10 | 1 | 650 | 141 | 17 | 1.92 | 0.181 |
| | 2 | 646 | 146 | 74 | 1.933 | 0.191 |
| | 3 | 641 | 152 | 133 | 1.949 | 0.203 |

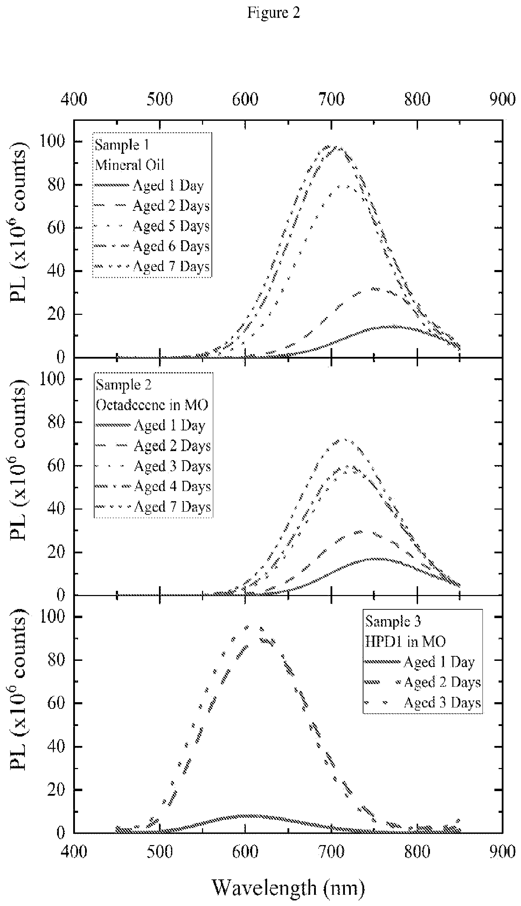

The data in Table 4 reveals that the hindered piperidine derivatives induce a dramatic blue shift in photoluminescence for the silicon quantum dots that they coat. Additional information is evident about the samples from the spectra in Figures 2-12.

Figure 2 displays the photoluminescence emission (PL) spectra of Samples 1 (Si nanoparticles directly deposited into mineral oil), 2 (Si nanoparticles directly deposited into octadecene (5wt%) in mineral oil (MO)), and 3 (Si nanoparticles directly deposited into HPD 1 (5wt%) in mineral oil (MO)) when excited at 365 nm at different passivation/aging times. As can be seen from Figure 1, the silicon nanoparticles deposited into mineral oil containing HPD 1 molecules have a significant blue shift of the emission after passivation/aging Day 1 and increase emission intensity much quicker than samples captured in mineral oil (Sample 1) or octadecene in mineral oil (Sample 2). The PL intensity reached by the sample captured with HPD 1 reaches a maximum value in 3 days of passivation/aging when silicon nanoparticles captured in mineral oil alone take 7 days of passivation/aging to reach similar PL values.

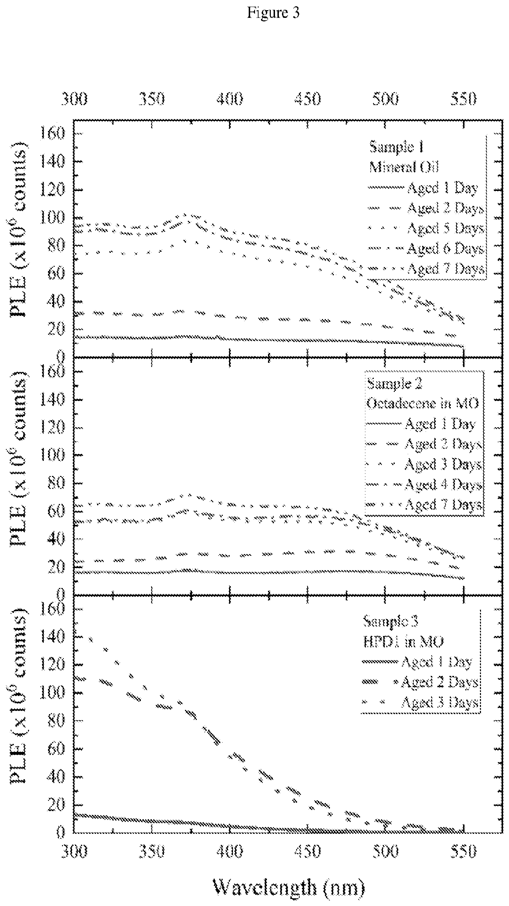

Figure 3 displays the photoluminescence excitation spectra for Samples 1, 2, and 3. This is measured by placing the emission monochromator near the PL emission peak and then scanning the excitation wavelength while recording the intensity values of the emission detector. Figure 3 illustrates a significant change in the PLE for the HDP 1 treated silicon nanoparticle than particles treated with mineral oil or octadecene in mineral oil.

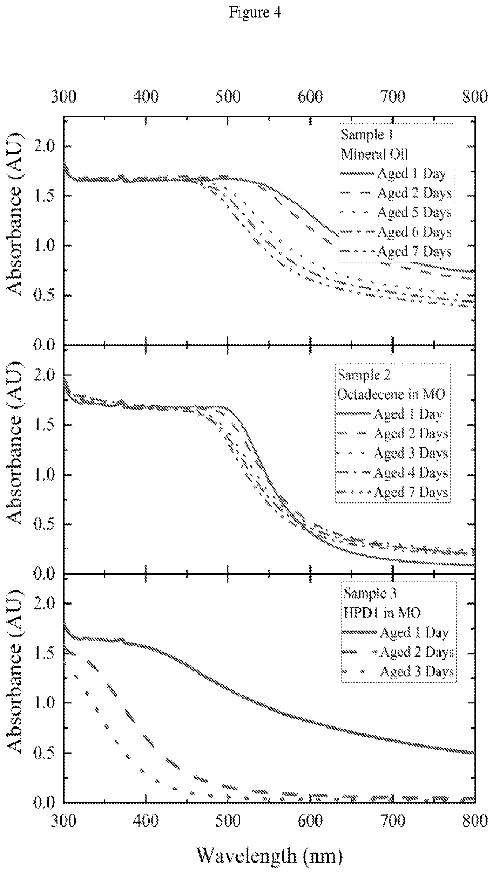

Figure 4 displays the UV-Vis absorbance spectra as a function of passivation/aging time for the three samples of silicon nanoparticles capture and passivated in mineral oil (Sample 1), octadecene (Sample 2), and HPD 1 (Sample 3). These spectra reveal a large deviation of the absorbance from the particles passivated/aged with HPD 1 compared to the other fluids.

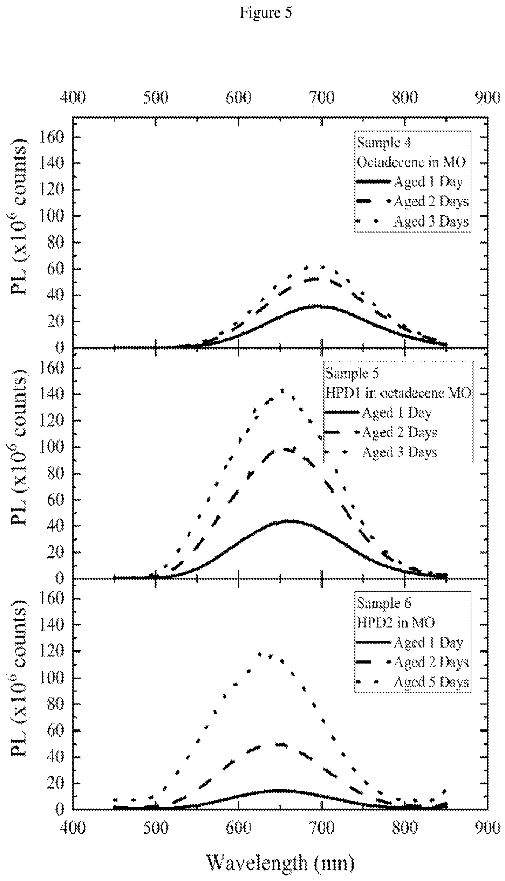

Figure 5 displays the photoluminescence emission (PL) of silicon nanoparticles captured in 5wt% octadecene in mineral oil (Sample 4), 5wt% HPD 1 added to half of the Sample 4 sample prior to exposure to air (Sample 5), and 5wt% HPD 2 in mineral oil (Sample 6) all passivated/aged for three days at 60 °C and 85% R.H. The emission spectra of the two samples with the hindered piperidine derivative (Sample 5 and Sample 6) are blue shifted relative to the spectra of the without (Sample 4) and the emission intensity after 3 days is at least 2-fold more with the hindered piperidine derivative relative to octadecene. All samples excited at 365 nm with 2 nm slit widths for the excitation and emission monochromators and an integration time of 0.1 s per nm.

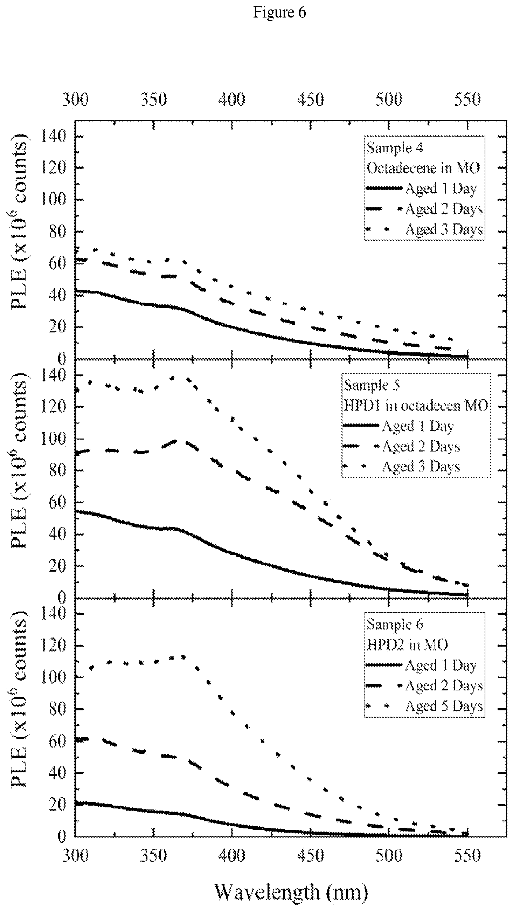

Figure 6 displays the photoluminescence excitation (PLE) spectra for the same samples displayed in Figure 5 (Sample 4, Sample 5, and Sample 6). For each of these spectra, the emission monochromator was set at the peak emission wavelength and then the excitation wavelength was swept as the PL emission intensity was recorded (displayed as the PLE intensity on the y-axis in Figure 6. Both emission and excitation monochromator slit widths were set to 2 nm and the integration time was 0.1 s per nm for all spectra. As in Figure 5, it is obvious that exposing the silicon nanoparticles to a hindered piperidine derivative prior to exposure to air dramatically increases the PLE intensity over only a few days passivation/aging relative to silicon nanoparticle not exposed.

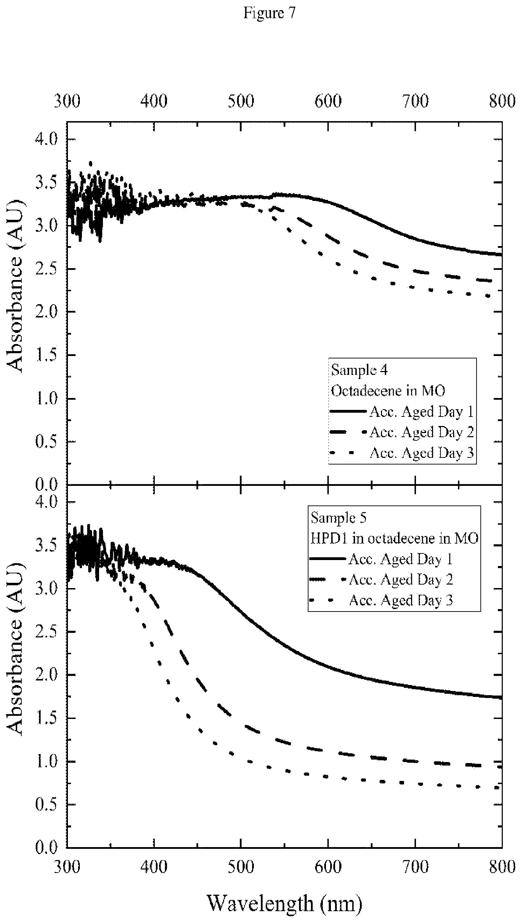

Figure 7 displays the UV-Vis absorbance spectra of silicon nanoparticle capture in octadecene (Sample 4) and then having HPD 1 added to the silicon nanoparticle capture in octadecene prior to being exposed to air (Sample 5) passivated/aged at 60 °c and 85%R.H. for 1, 2, and 3 days. The absorbance of the nanoparticles exposed to HPD 1 blue shifts much quicker than the octadecene only treated nanoparticles.

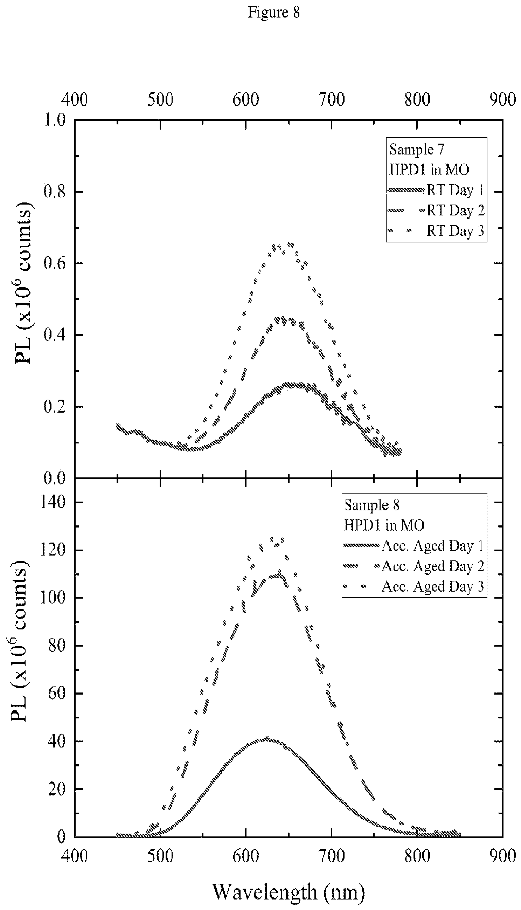

Figure 8 displays the photoluminescence emission spectra (PL) for silicon nanoparticles capture in 5wt% HPD 1 in mineral oil and then exposed to air (Sample 7) and the passivation/aging process of 60 °C and 85%R.H. (Sample 8). Sample 8 is Sample 7 split in half by mass prior to exposure to air. The emission and excitation monochromators slit widths were set at 2 nm and the integration time was 0.1 s per nm for each spectra. It is evident by the emission spectra that passivation/aging the HPD 1 silicon nanoparticles at elevated temperature and humidity accelerates the photoluminescent emission intensity of the samples.

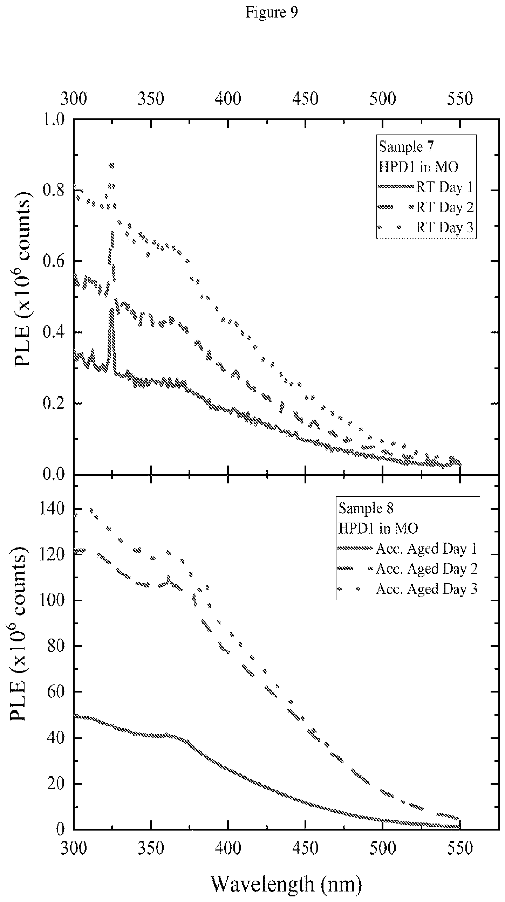

Figure 9 displays the photoluminescence excitation (PLE) spectra for the same samples displayed in Figure 8 (Sample 7 and Sample 8). For each of these spectra, the emission monochromator was set at the peak emission wavelength and then the excitation wavelength was swept as the PL emission intensity was recorded (displayed as the PLE intensity on the y-axis in Figure 8). Both emission and excitation monochromator slit widths were set to 2 nm and the integration time was 0.1 s per nm for all spectra. As is evident in Figure 8, it is evident that exposing the hindered piperidine derivative treated silicon nanoparticles to elevated temperature and humidity conditions (passivation/aging process) results in a much quicker increase in the photoluminescent properties of the nanoparticles.

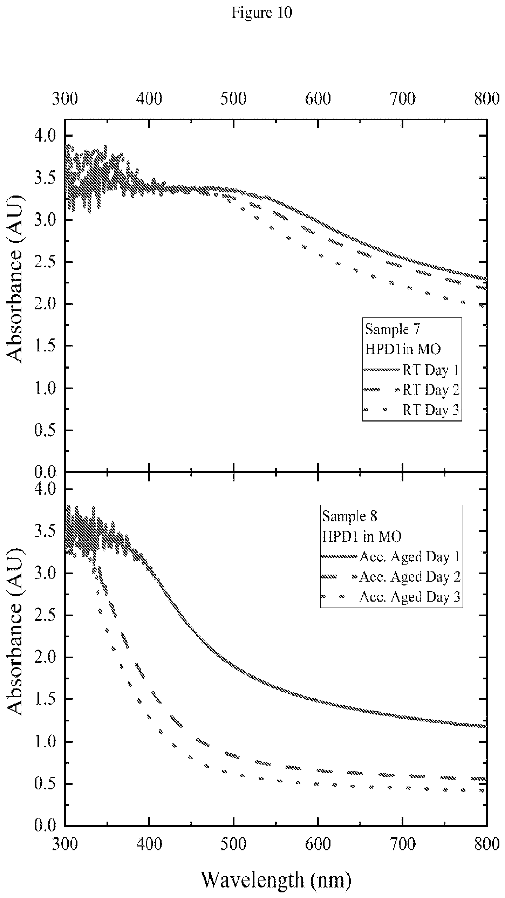

Figure 10 displays the UV-Vis absorbance spectra of silicon nanoparticle capture in 5wt% HPD 1 in mineral oil and split in half by mass to undergo room temperature aging (Sample 7) and passivated/aged at 60 °c and 85%R.H. (Sample 8) for 1, 2, and 3 days. The absorbance of the passivated/aged nanoparticle is considerably blue-shifted in three days relative to nanoparticle exposed to room temperature and humidity conditions.

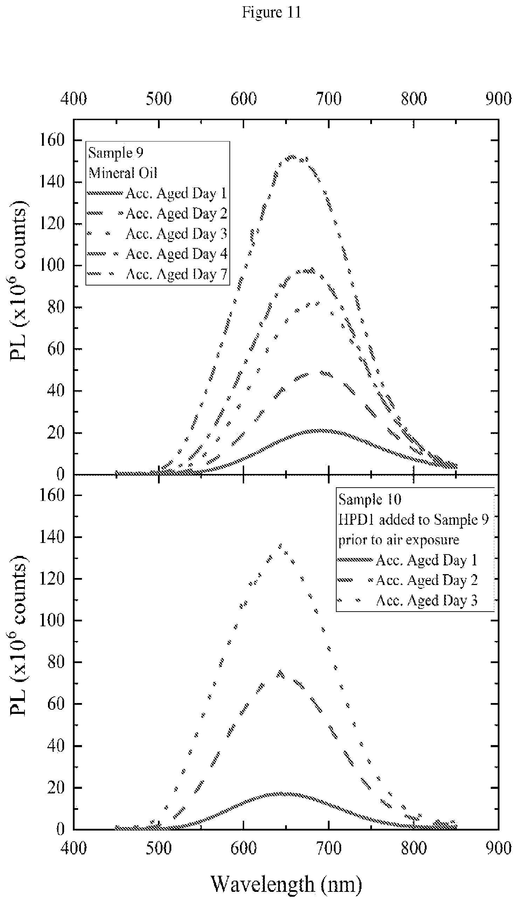

Figure 11 displays the photoluminescent emission spectra (PL) for silicon nanoparticles capture in mineral oil (Sample 9) and then split in half by mass and having 5wt% HPD 1 added to the new sample (Sample 10) prior to exposure to air. Both samples were then passivate/aged at 60 °C and 85%R.H. for up 7 days (Sample 9) and 10 days (Sample 10). The emission and excitation monochromators slit widths were set at 2 nm and the integration time was 0.1 s per nm for each spectra. It is clear that adding the HDP 1 molecule to the silicon nanoparticle captured in mineral oil, prior to exposing the sample to air leads to an initial blue shift of the emission spectrum and a much quicker increase in the emission intensity to the sample not exposed to the hindered piperidine derivative. This illustrates the potential of adding treating agents to the silicon nanoparticle prior to exposure to air and obtaining similar optical properties as nanoparticles deposited directly into capture fluid containing the treating molecule.

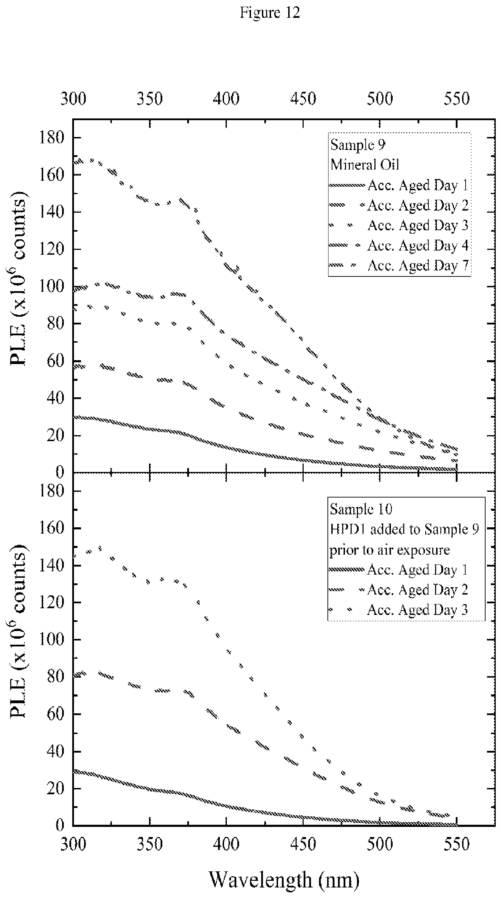

Figure 12 displays the photoluminescent excitation spectra (PLE) of Sample 9 and Sample 10. For each of these spectra, the emission monochromator was set at the peak emission wavelength and then the excitation wavelength was swept as the PL emission intensity was recorded (displayed as the PLE intensity on the y-axis in Figure 12). Both emission and excitation monochromator slit widths were set to 2 nm and the integration time was 0.1 s per nm for all spectra.

## Claims

1. A composition comprising silicon nanoparticles, wherein the silicon nanoparticles comprise hindered piperidine derivative free radical scavengers on the surfaces of the silicon nanoparticles.

2. The composition comprising silicon nanoparticles of Claim 1, wherein the silicon nanoparticles include silicon quantum dots.

3. The composition comprising silicon nanoparticles of Claim 1 or Claim 2, wherein silicon nanoparticles are free of aromatic conjugation between the hindered piperidine derivative free radical scavengers and the silicon nanoparticles.

4. The composition comprising silicon nanoparticles of any one of Claims 1-3, wherein the hindered piperidine derivative free radical scavenger is non-aromatic.

5. The composition comprising silicon nanoparticles of any one of Claims 1-4, wherein the free radical scavengers are one or any combination of more than one selected from a group consisting of bis(1,2,2,6,6-pentamethyl-4-piperidyl) sebacate; bis(1-octyl-2,2,6,6,-tetramethyl-4-piperidyl) sebacate; bis(2,2,6,6-tetramethyl-4-piperidyl) sebacate; and 4-hydroxy-2,2,6,6-tetramethylpiperidine 1-oxyl benzoate.

6. The composition comprising silicon nanoparticles of any one of Claims 1-5, wherein the silicon nanoparticles further comprise an oxide in combination with the hindered piperidine derivative on the surface of the silicon nanoparticle.

7. A process for making silicon nanoparticles with hindered piperidine derivative free radical scavengers on the surface of the silicon nanoparticle, the process comprising producing silicon nanoparticles using a Very High Frequency Low Pressure Plasma (VHFLPP) process that collects silicon nanoparticles in a capture fluid as they are made and wherein hindered piperidine derivative free radical scavengers are provided in the capture fluid prior to collecting silicon nanoparticles and/or after collecting the silicon nanoparticles and prior to exposing the silicon nanoparticle to air so that the silicon nanoparticles and hindered piperidine derivative free radical scavengers are present in the capture fluid together.

8. The process of Claim 7, wherein the free radical scavengers are one or any combination of more than one selected from a group consisting of bis(1,2,2,6,6-pentamethyl-4-piperidyl) sebacate; bis(1-octyl-2,2,6,6,-tetramethyl-4-piperidyl) sebacate; bis(2,2,6,6-tetramethyl-4-piperidyl) sebacate; and 4-hydroxy-2,2,6,6-tetramethylpiperidine 1-oxyl benzoate.

9. The process of any one of Claims 7-8, wherein the hindered piperidine derivative free radical scavengers are non-aromatic.

10. The process of any one of claims 7-9, wherein the process further includes the step of passivating the silicon nanoparticles in the capture fluid by exposing the capture fluid containing the silicon nanoparticles to a moisture-containing atmosphere for a period of time, optionally at a temperature above 25 degrees Celsius to produce passivated silicon nanoparticles with surface bound hindered piperidine derivative free radical scavengers.

## Patentansprüche

1. Zusammensetzung, umfassend Siliziumnanopartikel, wobei die Siliziumnanopartikel gehinderte Piperidinderivatradikalfänger auf den Oberflächen der Siliziumnanopartikel umfassen.

2. Zusammensetzung, umfassend Siliziumnanopartikel, nach Anspruch 1, wobei die Siliziumnanopartikel Siliziumquantenpunkte einschließen.

3. Zusammensetzung, umfassend Siliziumnanopartikel, nach Anspruch 1 oder 2, wobei die Siliziumnanopartikel frei von einer aromatischen Konjugation zwischen den gehinderten Piperidinderivatradikalfängern und den Siliziumnanopartikeln sind.

4. Zusammensetzung, umfassend Siliziumnanopartikel, nach einem der Ansprüche 1 bis 3, wobei der gehinderte Piperidinderivatradikalfänger nichtaromatisch ist.

5. Zusammensetzung, umfassend Siliziumnanopartikel, nach einem der Ansprüche 1 bis 4, wobei die Radikalfänger eines oder eine beliebige Kombination von mehr als einem sind, ausgewählt aus einer Gruppe bestehend aus Bis(1,2,2,6,6-pentamethyl-4-piperidyl)sebacat; Bis(1-octyl-2,2,6,6,-tetramethyl-4-piperidyl)sebacat; Bis(2,2,6,6-tetramethyl-4-piperidyl)sebacat; und 4-Hydroxy-2,2,6,6-tetramethylpiperidin-1-oxylbenzoat.

6. Zusammensetzung, umfassend Siliziumnanopartikel, nach einem der Ansprüche 1 bis 5, wobei die Siliziumnanopartikel ferner ein Oxid in Kombination mit dem gehinderten Piperidinderivat auf der Oberfläche des Siliziumnanopartikels umfassen.

7. Verfahren zum Herstellen von Siliziumnanopartikeln mit gehinderten Piperidinderivatradikalfängern auf der Oberfläche des Siliziumnanopartikels, das Verfahren umfassend ein Erzeugen von Siliziumnanopartikeln unter Verwendung eines sehr hochfrequenten Niederdruckplasmaverfahrens (VHFLPP-Verfahren), das Siliziumnanopartikel in einem Auffangfluid sammelt, während sie hergestellt werden, und wobei gehinderte Piperidinderivatradikalfänger in dem Auffangfluid bereitgestellt werden, bevor die Siliziumnanopartikel gesammelt werden und/oder nachdem dem die Siliziumnanopartikel gesammelt werden und bevor das Siliziumnanopartikel der Luft ausgesetzt wird, sodass die Siliziumnanopartikel und die gehinderten Piperidinderivatradikalfänger zusammen in dem Auffangfluid vorhanden sind.

8. Verfahren nach Anspruch 7, wobei die Radikalfänger eines oder eine beliebige Kombination von mehr als einem sind, ausgewählt aus einer Gruppe bestehend aus Bis(1,2,2,6,6-pentamethyl-4-piperidyl)sebacat; Bis(1-octyl-2,2,6,6,-tetramethyl-4-piperidyl)sebacat; Bis(2,2,6,6-tetramethyl-4-piperidyl)sebacat; und 4-Hydroxy-2,2,6,6-tetramethylpiperidin-1-oxylbenzoat.

9. Verfahren nach einem der Ansprüche 7 bis 8, wobei die gehinderten Piperidinderivatradikalfänger nichtaromatisch sind.

10. Verfahren nach einem der Ansprüche 7 bis 9, wobei das Verfahren ferner den Schritt eines Passivierens der Siliziumnanopartikel in dem Auffangfluid durch Aussetzen des Auffangfluids, das die Siliziumnanopartikel enthält, gegenüber einer feuchtigkeitshaltigen Atmosphäre über einen Zeitraum, optional bei einer Temperatur von über 25 Grad Celsius, einschließt, um passivierte Siliziumnanopartikel mit oberflächengebundenen gehinderten Piperidinderivatradikalfängern zu erzeugen.

## Revendications

1. Composition comprenant des nanoparticules de silicium, dans laquelle les nanoparticules de silicium comprennent des piégeurs de radicaux libres dérivés de pipéridine encombrée sur les surfaces des nanoparticules de silicium.

2. Composition comprenant des nanoparticules de silicium selon la revendication 1, dans laquelle les nanoparticules de silicium comportent des points quantiques de silicium.

3. Composition comprenant des nanoparticules de silicium selon la revendication 1 ou la revendication 2, dans laquelle les nanoparticules de silicium sont exemptes de conjugaison aromatique entre les piégeurs de radicaux libres dérivés de pipéridine encombrée et les nanoparticules de silicium.

4. Composition comprenant des nanoparticules de silicium selon l'une quelconque des revendications 1 à 3, dans laquelle le piégeur de radicaux libres dérivé de pipéridine encombrée est non aromatique.

5. Composition comprenant des nanoparticules de silicium selon l'une quelconque des revendications 1 à 4, dans laquelle les piégeurs de radicaux libres sont un ou toute combinaison de plus d'un choisi dans un groupe constitué de sébaçate de bis(1,2,2,6,6-pentaméthyl-4-pipéridyle) ; sébaçate de bis(1-octyl-2,2,6,6,-tétraméthyl-4-pipéridyle) ; sébaçate de bis(2,2,6,6-tétraméthyl-4-pipéridyle) ; et 1-oxyl benzoate de 4-hydroxy-2,2,6,6-tétraméthylpipéridine.

6. Composition comprenant des nanoparticules de silicium selon l'une quelconque des revendications 1 à 5, dans laquelle les nanoparticules de silicium comprennent en outre un oxyde en combinaison avec le dérivé de pipéridine encombrée sur la surface de la nanoparticule de silicium.

7. Procédé de préparation de nanoparticules de silicium avec des piégeurs de radicaux libres dérivés de pipéridine encombrée sur la surface de la nanoparticule de silicium, le procédé comprenant la production de nanoparticules de silicium à l'aide d'un procédé plasma à basse pression à très haute fréquence (VHFLPP) qui collecte des nanoparticules de silicium dans un fluide de capture à mesure de leur fabrication et dans lequel des piégeurs de radicaux libres dérivés de pipéridine encombrée sont fournis dans le fluide de capture avant de collecter des nanoparticules de silicium et/ou après avoir collecté les nanoparticules de silicium et avant l'exposition des nanoparticules de silicium à l'air, de sorte que les nanoparticules de silicium et les piégeurs de radicaux libres dérivés de pipéridine encombrée sont présents ensemble dans le fluide de capture.

8. Procédé selon la revendication 7, dans lequel les piégeurs de radicaux libres sont un ou toute combinaison de plus d'un choisi dans un groupe constitué de sébaçate de bis(1,2,2,6,6-pentaméthyl-4-pipéridyle) ; sébaçate de bis(1-octyl-2,2,6,6,-tétraméthyl-4-pipéridyle) ; sébaçate de bis(2,2,6,6-tétraméthyl-4-pipéridyle) ; et 1-oxyl benzoate de 4-hydroxy-2,2,6,6-tétraméthylpipéridine.

9. Procédé selon l'une quelconque des revendications 7 à 8, dans lequel les piégeurs de radicaux libres dérivés de pipéridine encombrée sont non aromatiques.

10. Procédé selon l'une quelconque des revendications 7 à 9, dans lequel le procédé comporte en outre l'étape de passivation des nanoparticules de silicium dans le fluide de capture en exposant le fluide de capture contenant les nanoparticules de silicium à une atmosphère contenant de l'humidité pendant un laps de temps, facultativement à une température supérieure à 25 degrés Celsius, pour produire des nanoparticules de silicium passivées ayant des piégeurs de radicaux libres dérivés de pipéridine encombrée liés en surface.
